## Europäisches Patentamt

## European Patent Office

## Office européen des brevets

(19)

(11) Veröffentlichungsnummer: **0 335 078**

**A2**

(12)

# EUROPÄISCHE PATENTANMELDUNG

(21) Anmeldenummer: **89101738.6**

(22) Anmeldetag: **01.02.89**

(51) Int. Cl.⁴: **G01N 3/08 , A41H 5/01**

(30) Priorität: **28.03.88 DE 3810495**

(43) Veröffentlichungstag der Anmeldung:
**04.10.89 Patentblatt  89/40**

(84) Benannte Vertragsstaaten:
**AT BE CH DE ES FR GB IT LI NL**

(71) Anmelder: **HEINECKE & KLAPROTH GMBH & CO. KG**
**Friedrich-Bach-Strasse 25**
**D-3062 Bückeburg(DE)**

(72) Erfinder: **Deerberg, Rolf**
**Windmühlenstrasse 23**
**D-3062 Bückenburg(DE)**

(74) Vertreter: **Zinnecker, Armin, Dipl.-Ing. et al**
**Rechtsanwälte Eduard Lorenz - Dipl.-Ing.**
**Hans-K. Gossel Dr. Ina Philipps - Dr. Paul B.**
**Schäuble Dr. Siegfried Jackermeier Dipl.-Ing.**
**Armin Zinnecker**
**Widenmayerstrasse 23 D-8000 München**
**22(DE)**

(54) **Vorrichtung zur Demonstration der elastischen Dehnfähigkeit von Hosenbunden.**

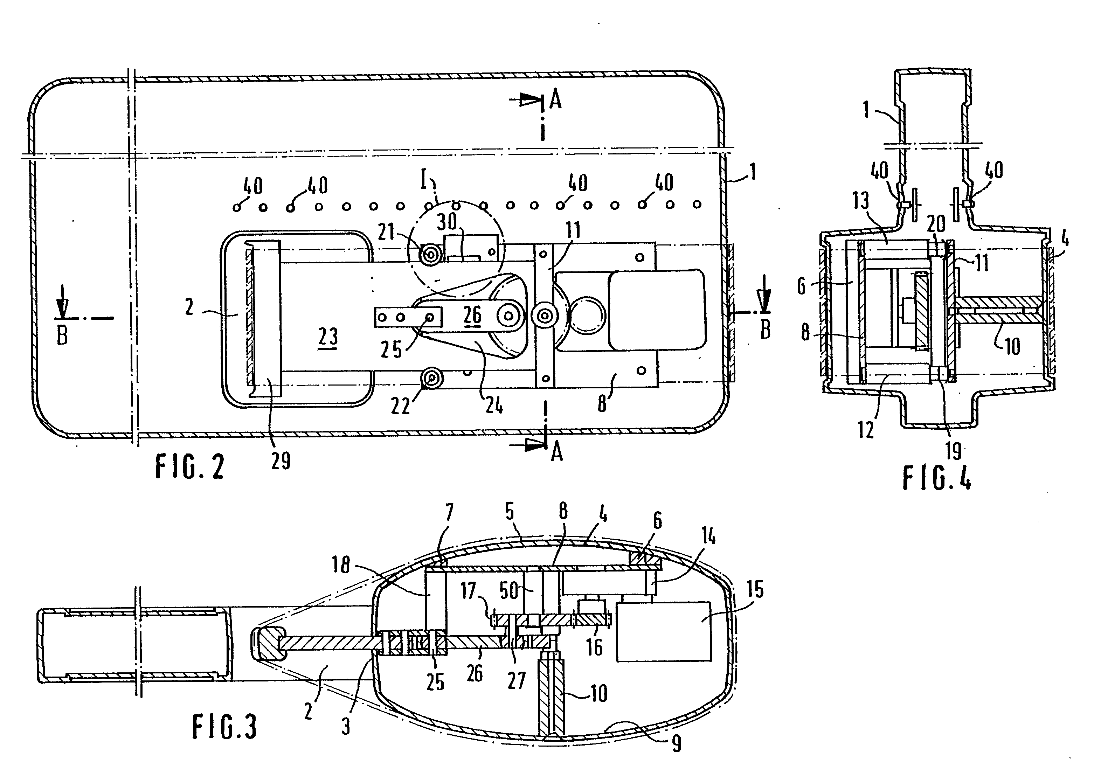

(57) Eine Vorrichtung dient zur Demonstration der elastischen Dehnfähigkeit von Hosenbunden. Sie besteht aus einem rahmenartigen Gehäuse mit einer im Querschnitt ellipsenförmigen Halteeinrichtung für den Hosenbund, aus einem durch einen Elektromotor hinund herbeweglichen Spannbacken und aus einer die jeweilige Dehnung anzeigenden Einrichtung. Um eine konstruktiv einfache, wenig Platz beanspruchende und dennoch werbewirksame Vorrichtung dieser Art zu schaffen, besteht die Halteeinrichtung aus einem im Querschnitt ellipsenförmigen Gehäuseteil, in dem in einer Führung (21, 22) ein Schieber (23) querverschieblich auf der langen Achse des Querschnitts geführt ist, der an seinem äußeren, außerhalb des Gehäuseteils liegenden Ende den Spannbacken (29) trägt. Die quer zu seiner Bewegungsrichtung gemessene Länge des Spannbackens (29) entspricht der Höhe des Bundes der Hose. Der von der Hose getrennte Bundbereich ist in Form eines endlosen Bandes um den Spannbacken (29) und den als Widerlager dienenden Gehäuseteil geschlungen (Fig. 2).

FIG. 2

## Vorrichtung zur Demonstration der elastischen Dehnfähigkeit von Hosenbunden

Die Erfindung betrifft eine Vorrichtung zur Demonstration der elastischen Dehnfähigkeit von Hosenbunden, bestehend aus einem rahmenartigen Gehäuse mit einer im Querschnitt ellipsenförmigen Halteeinrichtung für den Hosenbund, aus einem durch einen Elektromotor hin- und herbeweglichen Spannbacken und aus einer die jeweilige Dehnung anzeigenden Einrichtung.

Eine aus der DE-PS 22 02 036 bekannte Vorrichtung dieser Art besteht aus einer Hosenbüste, die aus zwei in den Hosenbeinen verlaufenden Stützen aufgebaut ist, die auf einem unteren Gehäusekasten befestigt und durch ein oberes Querjoch miteinander verbunden sind, an dem zwei Führungsstangen angeordnet sind, auf denen über Gleitbuchsen abgerundete Spannbacken hin-und herbeweglich geführt sind, die die Enden eines im Querschnitt etwa ellipsenförmigen Rahmens bilden. Die Spannbacken sind durch eine Zugfeder miteinander verbunden, die diese in einer inneren Stellung zu halten trachtet. Die Spannbacken sind mit zwei inneren zueinander parallelen Stoßleisten versehen, zwischen denen ein zweiarmiger, an seinen Enden Rollen tragender und endseitig auf einer vertikalen Welle befestigter Hebel in der Weise angeordnet ist, daß dieser bei Drehung der Welle die Spannbacken synchron im Takt seines Umlaufes nach außen bewegt. Die den zweiarmigen Hebel tragende Welle ist durch eine mit Kardangelenken versehene Welle von einem Getriebemotor angetrieben, der in dem bodenseitigen Gehäusekasten angeordnet ist. Die Hosenbüste ist mit der Hose verkleidet, so daß die aus- und einwärtsbewegten Spannbacken die elastische Dehnfähigkeit des Hosenbundes anschaulich zeigen.

Die bekannte Vorrichtung ist verhältnismäßig groß, schwer und in ihrer Konstruktion aufwendig, so daß sie teuer und zu Werbezwecken nur schwierig aufzustellen ist. Wegen des Raumbedarfs und der Kosten ist die bekannte Vorrichtung daher nur ausnahmsweise als Werbemittel eingesetzt worden.

Aufgabe der Erfindung ist es, eine konstruktiv einfache, wenig Platz beanspruchende und dennoch werbewirksame Vorrichtung der eingangs angegebenen Art zu schaffen.

Erfindungsgemäß wird diese Aufgabe bei einer Vorrichtung der gattungsgemäßen Art dadurch gelöst, daß die Halteeinrichtung aus einem im Querschnitt ellipsenförmigen Gehäuseteil besteht, in dem in einer Führung ein Schieber querverschieblich auf der langen Achse des Querschnitts geführt ist, der an seinem äußeren, außerhalb des Gehäuseteils liegenden Ende den Spannbacken trägt, daß die quer zu seiner Bewegungsrichtung gemessene Länge des Spannbackens der Höhe des Bundes der Hose entspricht und daß der von der Hose getrennte Bundbereich in Form eines endlosen Bandes um den Spannbacken und den als Widerlager dienenden Gehäuseteil geschlungen ist. Die erfindungsgemäße Vorrichtung kann verhältnismäßig klein gehalten werden, da diese nicht die ganze Hose, sondern nur den interessierenden Bundbereich der Hose in Form eines Bandes ausreichender Breite zeigt. Der Demonstrations- und Werbeeffekt wird durch die Ausstellung nur des Bundbereiches der Hose in Form eines oberhalb des Schrittes von der Hose abgetrennten Bandes nicht beeinträchtigt, weil das Oberteil der Hose als solches erkennbar ist und die Dehnfähigkeit des Bundbereiches an diesem anschaulich und in werbewirksamer Weise demonstriert werden kann. Der Antrieb für den Schieber kann konstruktiv so klein gehalten werden, daß er in dem ellipsenförmigen Gehäuseteil untergebracht werden kann.

Nach einer erfinderischen Weiterbildung ist vorgesehen, daß parallel zu dem Schieber in dem Gehäuse eine Reihe von Schaltern angeordnet ist, die von einer von dem Schieber mitbewegten Betätigungseinrichtung beim Überfahren betätigt werden und mindestens eine Reihe von Lampen oder Leuchtdioden ein- und ausschalten. Bei dieser Ausgestaltung wird die demonstrierte Dehnung des Hosenbundes in einer die Aufmerksamkeit des Publikums auf sich lenkenden Weise noch durch Lampen- oder Diodenbänder unterstrichen. Diese Lampen- oder Diodenbänder sind zweckmäßigerweise sich über die gesamte Breite des Hosenbundes erstreckend oberhalb des ellipsenförmigen Gehäuses auf einer Werbefläche angeordnet. Zweckmäßigerweise sind zwei Lampen- oder Leuchtdiodenbänder auf beiden Seiten des ellipsenförmigen Gehäuseteils vorgesehen, so daß die Demonstrationsvorrichtung die Aufmerksamkeit der Betrachter noch stärker auf sich zieht.

Der Schieber kann aus einer in der Mittelebene des Gehäuseteils geführten Platte mit zueinander parallelen Seitenkanten bestehen, die zwischen paarweise an den Seitenkanten anliegenden Führungsrollen gehalten ist. Der Schieber kann durch ein Pleuel angetrieben sein, dessen inneres Ende auf einem exzentrischen Kurbelzapfen eines Zahnrades gelagert ist, das über Zwischenzahnräder von dem Elektromotor angetrieben ist. Zweckmäßigerweise bestehen die Schalter aus Reedrelais und die Betätigungseinrichtung aus einem an dem Schieber befestigten Magneten.

In weiterer Ausgestaltung ist vorgesehen, daß das ellipsenförmige Gehäuseteil einen einen Teil der Außenseite des Gehäuses bildenden Wandungsteil und einen in einem fensterartigen Ausschnitt des Gehäuses liegenden Wandungsteil aufweist der Schieber den den fensterartigen Ausschnitt begrenzenden Wandungsteil durchsetzt und der Spannbacken innerhalb des Fensterausschnittes hin- und herverschieblich ist. Auf diese Weise ist der die Dehnung demonstrierende bandförmige Hosenbundbereich in werbewirksamer Weise in die Demonstrationsvorrichtung integriert. Zweckmäßigerweise bildet der ellipsenförmige Gehäuseteil eine Ausbauchung eines im wesentlichen rechteckigen Gehäuses, so daß die übrige Gehäusefläche beidseits als Werbefläche verwendet werden kann und die gesamte Vorrichtung beispielsweise die Form einer Demonstrationstafel hat.

Die Leuchtdioden oder Lampen können in Form eines Bandes parallel zu Bewegungsrichtung des Schiebers oberhalb und/oder unterhalb des Fensters in oder am Rande der Werbefläche angeordnet sein.

Zweckmäßigerweise besteht die Platte des Schiebers aus Kunststoff. Das Pleuel kann einstückig mit der Platte ausgebildet und mit dieser durch ein sogenanntes Filmscharnier gelenkig verbunden sein.

Ein nur einseitig ausfahrbarer Schieber mit Spannbacken führt zu einer kostengünstigen und dennoch werbewirksamen Vorrichtung. Das ellipsenförmige Gehäuseteil kann sich auch im Innern des Gehäuses befinden, wobei dann beidseits von diesem fensterartige Ausschnitte vorgesehen und aus den beiden inneren Begrenzungswandungen der Fenster mit Spannbacken versehene Schieber ausfahrbar sind.

Ein Ausführungsbeispiel der Erfindung wird nachstehend anhand der Zeichnung näher erläutert. In dieser zeigt

Fig.1 eine Vorderansicht der Demonstrationsvorrichtung,

Fig.2 einen Längsschnitt durch die Vorrichtung nach Fig. 1,

Fig.3 einen Schnitt durch die Vorrichtung nach Fig. 1 längs der Linie B-B in Fig.2,

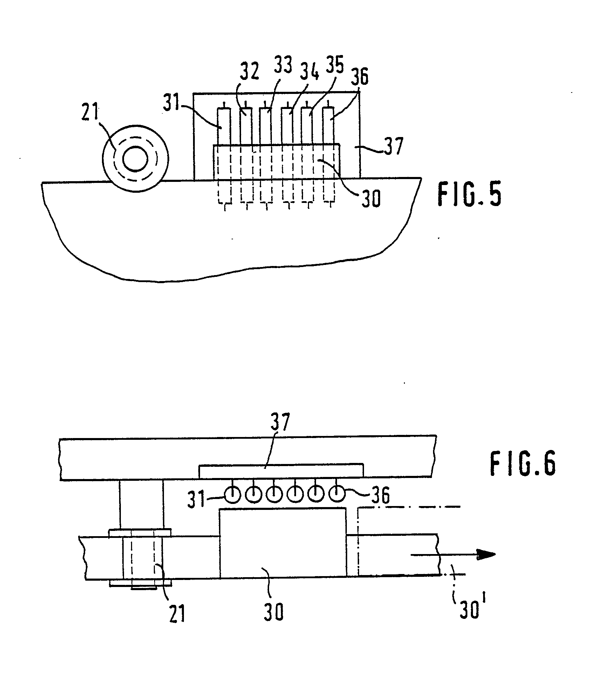

Fig.4 einen Schnitt durch die Vorrichtung nach Fig. 1 längs der Linie A-A in Fig.2,

Fig.5 den Ausschnitt I in Fig.2 in vergrößerter Darstellung und Fig. 6 eine Draufsicht auf die Darstellung nach Fig. 5 .

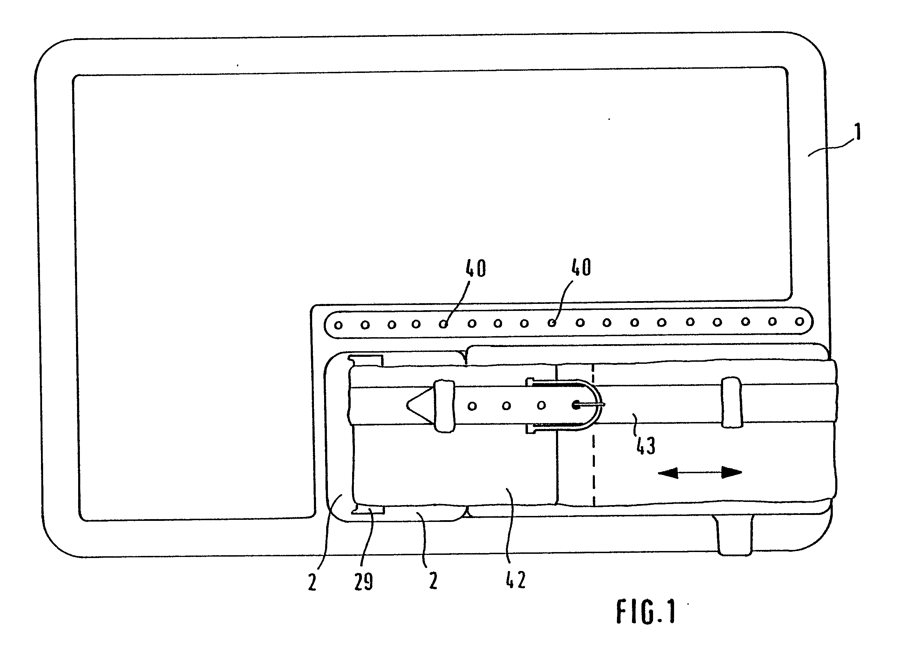

Die Demonstrationsvorrichtung besteht aus einem im wesentlichen rechteckigen Gehäuse 1, daß in seinem mittleren unteren Bereich einen ebenfalls etwa rechteckigen fensterartigen Durchbruch 2 aufweist. Zwischen der rechten Seite 3 des fensterartigen Durchbruchs 2 in Fig. 1 und der gegenüberliegenden Außenseite des Gehäuses 1 ist dieses mit einem im Querschnitt etwa ellipsenförmigen Gehäuseteil 4 versehen, das gleichsam eine Ausbauchung des sonst im wesentlichen flachen rechteckigen Gehäueses 1 bildet. An der hinteren schalenförmigen Wandung 5 des im Querschnitt ellipsenförmigen Gehäuseteils 4 ist über Sockelstücke 6,7 eine Montageplatte 8 befestigt. Mit dem gegenüberliegenden schalenförmigen Wandungsteil 9 ist ein Bolzen 10 verbunden, der an seinem Ende eine Leiste 11 trägt, die über endseitige Bolzen 12,13 mit dem mittleren Bereich der Montageplatte 8 verbunden sind. An die Montageplatte 8 ist der mit dem Getriebe 14 versehene Elektromotor 15 angeflanscht. Das Abtriebsritzel 15 des Getriebes 14 kämmt mit dem Zahnrad 15, das auf einem Zapfen 16 der Montageplatte 8 frei drehbar gelagert ist.

Auf den Bolzen 12,13 und Traglaschen 18 der Grundplatte 8 sind Rollen 19,20 und 21,22 frei drehbar gelagert, zwischen denen eine schieberartige Platte 23 verschieblich geführt ist. Die Rollen 19-22 weisen zur Halterung der Schieberplatte 23 deren Kanten übergreifende Ränder auf.

Die Schieberplatte 23 ist mit einem fensterartigen Ausschnitt 24 versehen. In diesem fensterartigen Ausschnitt ist an der schieberartigen Platte 23 um die Achse 25 das Pleuel 26 schwenkbar gelagert. Das andere Ende des Pleuels 26 ist auf dem Kurbelzapfen 27 gelagert, der exzentrisch auf dem Zahnrad 15 befestigt ist.

An seinem äußeren Ende trägt die Schieberplatte 23 einen Spannbacken 29.

Auf der Schieberplatte ist ein Permanentmagnet 30 befestigt, der beim Vorwärtshub die in einer Reihe angeordneten Reedrelais 31-36 betätigt. Die Reedrelais 31-36 sind auf einer mit der Montageplatte 8 verbundenen Halteplatte 37 angeordnet. In Fig .6 ist der Magnet 30 in seiner vorderen Stellung in vollen Linien und in seiner hinteren Stellung in strichpunktierten Linien 30′ dargestellt. In der Stellung 30 hat der Magnet alle Reedrelais 31 bis 36 geschaltet, während sich der Magnet in seiner Stellung 30′ außerhalb des Bereichs der Reedrelais befindet, so daß kein Reedrelais durchgeschaltet ist.

Oberhalb des ellipsenförmigen Gehäuseteils 4 sind auf beiden Seiten des Gehäuses 1 18 Leuchtdioden 40 angeordnet, von denen jeweils Gruppen von 3 LED von jeweils einem Reedrelais geschaltet werden, so daß beim Vorschub des Schiebers 23 nacheinander immer Gruppen von jeweils 3 LED aufleuchten und bei dem Rückhub erlöschen.

Um den in dem fensterartigen Ausschnitt 2 befindlichen Spannbacken 29 der schieberartigen Platte 23 und die außen liegende Gehäusewandung des ellipsenförmigen Gehäuseteils 4 ist in der aus Fig. 1 ersichtlichen Weise der bandförmige Oberteil eines Hosenbundes 42 geschlungen. Der Hosenbund ist mit einem elastischen Gürtel 43 versehen, der zusammen mit dem Hosenbund gedehnt wird.

**Ansprüche**

1. Vorrichtung zur Demonstration der elastischen Dehnfähigkeit von Hosenbunden, bestehend aus einem rahmenartigen Gehäuse mit einer im Querschnitt ellipsenförmigen Halteeinrichtung für den Hosenbund, aus einem durch einen Elektromotor hin-und herbeweglichen Spannbacken und aus einer die jeweilige Dehnung anzeigenden Einrichtung,

**dadurch gekennzeichnet,**

daß die Halteeinrichtung aus einem im Querschnitt ellipsenförmigen Gehäuseteil (4) besteht, in dem in einer Führung (19-22) ein Schieber (23) querverschieblich auf der langen Achse des Querschnitts geführt ist, der an seinem äußeren, außerhalb des Gehäuseteils (4) liegenden Ende den Spannbacken (29) trägt,

daß die quer zu seiner Bewegungsrichtung gemessene Länge des Spannbackens (29) der Höhe des Bundes (42) der Hose entspricht und daß der von der Hose getrennte Bundbereich (42) in Form eines endlosen Bandes um den Spannbacken (29) und den als Widerlager dienenden Gehäuseteil (4) geschlungen ist.

2. Vorrichtung nach Anspruch 1, dadurch gekennzeichnet, daß parallel zu dem Schieber (23) in dem Gehäuse (1) eine Reihe von Schaltern (31-36) angeordnet ist, die von einer von dem Schieber (23) mitbewegten Betätigungseinrichtung (30) beim Überfahren betätigt werden und mindestens eine Reihe von Lampen oder Leuchtdioden (40) ein- und ausschalten.

3. Vorrichtung nach Anspruch 1 oder 2, dadurch gekennzeichnet, daß der Schieber (23) aus einer in der Mittelebene des Gehäuseteils geführten Platte mit zueinander parallelen Seitenkanten besteht, die zwischen paarweise an den Seitenkanten anliegenden Führungsrollen (19-22) gehalten ist.

4. Vorrichtung nach einem der Ansprüche 1 bis 3, dadurch gekennzeichnet, daß der Schieber (23) durch ein Pleuel (26) angetrieben ist, dessen inneres Ende auf einem exzentrischen Kurbelzapfen (27) eines Zahnrades (15) gelagert ist, das über Zwischenzahnräder von dem Elektromotor (15) angetrieben ist.

5 Vorrichtung nach einem der Ansprüche 1 bis 4, dadurch gekennzeichnet, daß die Schalter aus Reedreiais (31 bis 36) und die Betätigungseinrichtung aus einem an dem Schieber (23) befestigten Magneten (30) bestehen.

6. Vorrichtung nach einem der vorhergehenden Ansprüche, dadurch gekennzeichnet, daß das ellipsenförmige Gehäuseteil (4) einen einen Teil der Außenseite des Gehäuses (1) bildenden Wandungsteil und einen in einem fensterartigen Ausschnitt (2) des Gehäuses (1) liegenden Wandungsteil aufweist, der Schieber (23) den den fensterartigen Ausschnitt begrenzenden Wandungsteil durchsetzt und der Spannbacken (29) innerhalb des Fensterausschnitts (2) hin- und herverschieblich ist.

7. Vorrichtung nach einem der vorhergehenden Ansprüche, dadurch gekennzeichnet, daß der elliptische Gehäuseteil (4) eine Ausbauchung des im wesentlichen rechteckigen Gehäuses (1) bildet.

8. Vorrichtung nach einem der vorhergehenden Ansprüche, dadurch gekennzeichnet, daß die Leuchtdioden oder Lampen in Form eines Bandes parallel zur Bewegungsrichtung des Schiebers (23) ober- oder unterhalb des Fenster (2) angeordnet sind.

9. Vorrichtung nach einem der vorhergehenden Ansprüche, dadurch gekennzeichnet, daß der Elektromotor und das Getriebe (14) in dem ellipsenförmigen Gehäuseteil angeordnet sind.

10. Vorrichtung nach einem der vorhergehenden Ansprüche, dadurch gekennzeichnet, daß die Platte des Schiebers (23) aus Kunststoff besteht.

11. Vorrichtung nach Anspruch 10, dadurch gekennzeichnet, daß das Pleuel (26) einstückig mit der Platte (23) ausgebildet und mit dieser durch ein sogenanntes Filmscharnier gelenkig verbunden ist.

12. Vorrichtung nach einem der vorhergehenden Ansprüche, dadurch gekennzeichnet, daß sich das ellipsenförmige Gehäuseteil im Innern des Gehäuses (1) befindet, beidseits von diesem fensterartige Ausschnitte vorgesehen sind und daß aus den beiden inneren Begrenzungswandungen der fensterartigen Ausschnitte mit Spannbacken versehene Schieber ausfahrbar sind.

FIG.1

FIG. 2

40   40   I   40   40

21   30   11

2

23   26   11

25

22   24   8

29

FIG. 2

FIG. 4

1

40   40

13   20

6   11

8   4

12   10

19

FIG. 4

FIG. 3

7   5   8   4   6   14

18

17   50   15

16

25   26   27   10

2   3   9

FIG. 3

EP 0 335 078 A2

32 33 34 35 36

31

21

37

30

FIG.5

37

FIG.6

31 36

21 30 30'